# FASCICULE DE BREVET EUROPEEN

(11) **EP 2 011 222 B1**
(45) Date de publication et mention de la délivrance du brevet: **12.07.2017**
(21) Numéro de dépôt: 07731942.4
(22) Date de dépôt: 25.04.2007
(51) Int. Cl.: H02P 1/28, H02P 1/30, E06B 9/70

(54) **SYSTEME MOTORISE DE FERMETURE DE BATIMENT**
MOTORISIERTES SYSTEM ZUM SCHLIESSEN EINES GEBÄUDES
MOTORIZED SYSTEM FOR CLOSING A BUILDING

(30) Priorité: 26.04.2006 FR 0651467
(43) Date de publication de la demande: 07.01.2009
(73) Titulaire: BUBENDORFF Société Anonyme, 68220 Attenschwiller (FR)
(72) Inventeur: WALTI, Olivier, 80800 Corbie (FR); CASTERAS, Nils, 80800 Corbie (FR)
(74) Mandataire: Rhein, Alain
(86) Numéro de dépôt international: PCT/FR2007/051169
(87) Numéro de publication internationale: WO 2007/125251

(56) Documents cités:
- EP-A- 1 538 735
- EP-A1- 0 833 435
- JP-A- 05 219 793
- JP-A- 11 150 966
- JP-A- 60 121 971
- JP-A- 61 214 794
- US-A- 5 368 116

## Description

L'invention concerne un dispositif de moteur asynchrone biphasé pour l'entraînement de systèmes de fermeture de bâtiment de type volet roulant.

La présente invention concerne le domaine des systèmes de fermeture pour bâtiment et en particulier des volets roulants ainsi que leur motorisation.

Il est d'ores et déjà connu de nombreux systèmes de fermeture de bâtiment motorisés qui, plus est, sont associés à des dispositifs de commande à distance facilitant leur commande d'ouverture et de fermeture.

Dans le domaine particulier des volets roulants, le moteur d'entraînement est de type tubulaire de manière à prendre position à l'intérieur du tube d'enroulement sur lequel est prévu apte à venir s'enrouler le tablier du volet roulant.

Il s'agit habituellement d'un moteur asynchrone à condensateur de déphasage comportant un enroulement principal et un enroulement secondaire permettant, non seulement, une inversion du sens de rotation du moteur, mais, en outre, au travers du déphasage de courant généré par le condensateur, de générer un couple d'entraînement au niveau du rotor de ce moteur. L'enroulement secondaire est préférentiellement différent de l'enroulement principal pour présenter une résistance et une inductance différente et, ainsi, faciliter le démarrage du moteur.

En raison de contraintes de fabrication, certains conçoivent des moteurs monophasés imparfaits, avec un enroulement secondaire qui est identique à l'enroulement principal. Cela les oblige à faire appel à un condensateur plus important et qui chauffe davantage. Evidemment, l'encapsulage d'un tel moteur dans un carter en matériau isolant synthétique et son implantation dans un tube d'enroulement de volet roulant ne facilitent pas l'évacuation des calories produites.

Pour en revenir au fonctionnement de ce type de moteur, les courants statoriques créent un champ magnétique tournant dans le stator, tandis que le rotor est constitué de conducteurs en court-circuit qui sont parcourus par des courants induits par le champ magnétique statorique.

Le couple de démarrage d'un tel moteur asynchrone à condensateur dépend de la valeur de ce dernier. Quoi qu'il en soit, ce type de moteur ne fonctionne de manière optimale, dans les conditions d'alimentation nominales, qu'au-delà d'une vitesse de rotation déterminée.

Ceci exposé, dans le cadre de leur application aux volets roulants, il convient de constater que si pour le déroulement d'un tablier d'un tel volet roulant, il ne faut guère de puissance et qu'un couple de démarrage moindre est suffisant dans la mesure où il ne faut vaincre que l'inertie à la rotation du tube d'enroulement du tablier, la problématique est différente lors du repliement.

Bien sûr, lorsque le tablier du volet roulant est totalement déployé et que les ajoures entre les lames articulées constituant ledit tablier sont fermés, la charge à entraîner par le moteur, lors des premiers tours de rotation, est moindre et le couple à produire est lui-même réduit. Cependant, si ce tablier de volet roulant se trouve dans une situation partiellement déployée, voire quasi totale sans que, pour autant, ne soient fermés les ajoures entre les lames, la commande de repliement dans ces conditions du volet roulant a pour conséquence de solliciter fortement le moteur. Dans ce cas, ce moteur doit être capable de produire un couple de démarrage important pour vaincre le couple inverse qu'exerce le poids du tablier sur le tube d'enroulement.

Aussi, dans ce domaine d'application des volets roulants, il est usuel d'utiliser des moteurs de puissance nominale largement supérieure à la puissance normalement requise.

Si cela se traduit par un surcoût, il en découle, également, l'utilité de recourir à une pluralité de moteurs de puissances distinctes pour couvrir l'intégralité de la gamme des volets roulants que l'on souhaite motoriser.

En outre, le surcroît de puissance du moteur, qui n'est finalement utile que pendant la phase de démarrage, c'est-à-dire durant une phase transitoire où le moteur ne fonctionne pas de manière optimale, a pour conséquence de solliciter fortement les éléments mécaniques du volet roulant, que ce soit en cas de blocage inopiné ou de commande d'arrêt de fonctionnement.

En particulier, il est usuel d'assurer l'arrêt du moteur, en fin de course de déploiement ou de repliement du tablier de volet roulant, au travers d'une mesure de déphasage entre courant et tension par exemple. Ce déphasage résulte d'une augmentation de la charge appliquée au moteur découlant, en l'occurrence, de l'arrivée en butée de fin de course basse ou haute du tablier. Dans ces conditions, on comprend bien qu'avant l'intervention de la coupure d'alimentation électrique du moteur, celui-ci contraint, de manière excessive, les éléments mécaniques du volet roulant, en raison de son surdimensionnement.

Il convient encore de remarquer que ce type de moteur est habituellement équipé d'un frein électromagnétique fonctionnant par manque de courant. Bien sûr, plus la puissance du moteur est importante, plus ce frein est sollicité et doit être dimensionné en conséquence.

A ce faible couple de démarrage produit par un moteur asynchrone à enroulements principal et secondaire, ceci sous des conditions d'alimentation nominales, en l'occurrence une tension nominale de 230 volts et une fréquence de 50 hertz, s'ajoute le problème de la variation de la tension secteur. En d'autres termes, cette tension du réseau d'alimentation d'une habitation n'est pas constante et égale à la valeur nominale de 230 volts, mais peut varier. En particulier, elle peut être inférieure à cette tension nominale et, dans ce cas, le couple de démarrage qu'un tel moteur asynchrone est susceptible de produire tend à décroître rapidement.

En particulier, on a pu noter qu'en deçà d'une tension de 180 volts le moteur est souvent incapable de démarrer. Il faut donc, là encore, tenir compte de cette variable de la tension d'alimentation du moteur lors du dimensionnement de ce dernier.

Finalement, si l'on prend en compte l'ensemble de ces contraintes que représente la motorisation d'un volet roulant, on en arrive nécessairement à la conclusion qu'il faudrait utiliser un moteur triphasé.

D'ailleurs, dés l'instant que l'on recherche un moteur avec certaines performances ou que l'on souhaite répondre à des contraintes particulière, il est systématiquement fait appel à un moteur triphasé équilibré, auquel on associe habituellement un convertisseur de puissance sous forme d'un dispositif de variation de vitesse de manière à pouvoir répondre à l'ensemble de ces exigences.

Cependant, pour une telle application d'un moteur triphasé à variation de vitesse à un volet roulant, l'homme du métier ne peut que constater qu'il est confronté à une impératif incontournable ou presque, à savoir la section maximale que peut emprunter le moteur tubulaire pour son logement dans le tube d'enroulement du volet roulant.

En effet, le moteur triphasé est de section trop importante pour permettre une telle implantation. Bien sûr, il est envisageable d'augmenter cette section de ce tube d'enroulement, mais cela conduit à une section plus importante du tablier de volet roulant une fois enroulé, donc du caisson dans lequel vient loger cet ensemble du mécanisme du volet roulant, sans compter toutes les implications générées au niveau d'une construction pour que celle-ci soit en mesure d'accueillir de tels caissons surdimensionnés. Par exemple, leur implantation dans l'épaisseur d'un mur peut-être rendu impossible. Une pose en applique du côté interne d'une construction rend ce caisson volumineux plus proéminent dans l'habitation. En cas de rénovation, un caisson plus épais réduit d'autant la surface de passage de lumière au niveau d'une fenêtre. Autant dire que cela va totalement à l'encontre de la démarche actuelle consistant à rendre le caisson d'un volet roulant le plus discret possible et à faciliter son intégration dans une construction.

Une autre solution consiste à placer un tel moteur triphasé à une extrémité dudit tube d'enroulement au lieu de l'intégrer dans ce dernier. Là encore cela entraine une extension latérale du caisson du volet roulant correspondant à l'encombrement supplémentaire créé par ce moteur, avec bien sûr pour conséquence là encore des aménagements spécifiques à prévoir au niveau de la construction.

Comme on peut le constater, le moteur triphasé, bien que parfaitement adapté pour l'entraînement d'un tablier de volet roulant, n'a pu être utilisé dans ce domaine d'application en raison de contraintes dimensionnelles incontournables.

Devant ce constat, l'homme du métier s'est systématiquement orienté vers le seul moteur qu'il jugeait capable de répondre techniquement et économiquement aux problèmes de l'entrainement motorisé des volets roulant, à savoir le moteur asynchrone monophasé, comme cela est par exemple décrit dans un contexte similaire dans le document EP 0 833 435, en général à condensateur.

L'objectif visé par la présente invention consiste, non seulement à améliorer, mais à optimiser le fonctionnement des systèmes de fermeture motorisés de type volet roulant, d'abord au travers d'un moteur asynchrone à deux enroulements, tel que décrit par exemple dans le document JP 05 219793 A, moteur auquel on associe un dispositif de variation de vitesse sous forme d'un convertisseur de puissance, ayant pour conséquence, pour des caractéristiques données, d'augmenter, sensiblement, le couple de démarrage que ces moteurs sont normalement amenés à produire sous l'influence d'un déphasage créé entre l'enroulement principal et l'enroulement secondaire au travers d'un simple condensateur.

En somme, l'entrainement est réalisé grâce à un moteur asynchrone biphasé dont le fonctionnement est géré par un variateur de vitesse pour satisfaire toutes les contraintes de couple que représente l'entrainement d'un tablier de volet roulant, dans toutes les situations possible d'ouverture ou de fermeture.

La variation de vitesse repose sur le principe d'une commande scalaire ayant pour objectif de faire varier la fréquence de l'alimentation tout en maintenant sensiblement constant le rapport tension efficace sur fréquence, à l'instar de ce qui est décrit dans EP 1 538 735, dans le but d'un flux constant dans la machine et, donc, de maintenir constante la fonction reliant la valeur du couple au glissement pour n'importe quelle fréquence d'alimentation.

En particulier pour un moteur à frein électromagnétique intégré, il a été imaginé, dans une démarche inventive, de gérer le fonctionnement du moteur selon cette fonction constante ou sensiblement constante de la tension sur la fréquence, sauf aux limites, en particulier dans une phase initiale de démarrage où la tension est choisie différente de zéro. En fait, cette tension est égale à une valeur seuil définie suffisante pour assurer le décollage de ce frein électromagnétique dont peuvent être équipés ces moteurs dans leur application à ces systèmes de fermeture de bâtiment, de type volet roulant.

Pour résumer, l'invention s'applique concrètement à des systèmes motorisés de fermeture de bâtiment, de type volet roulant comportant un moteur asynchrone biphasé comprenant deux enroulements auquel est associé un frein électromagnétique et un dispositif de variation de vitesse sous forme d'un convertisseur de puissance à commande scalaire, conçu apte à assurer un rapport tension efficace sur fréquence V_{eff}/f constant sur au moins une plage déterminée de la variation.

Et elle se caractérise par le fait que :
▪ le dispositif de variation de vitesse est conçu apte à soumettre ledit moteur, au moins en phase initiale de démarrage, à une tension seuil Vs et à une fréquence d'alimentation fs déterminée apte à assurer le décollage du frein électromagnétique ;
▪ et qu'au-delà de cette phase initiale ledit dispositif de variation de vitesse est défini apte à faire varier, selon le cas, la tension ou la fréquence jusqu'à atteindre la valeur de la constante à respecter du rapport tension efficace sur fréquence.

D'autres buts et avantages de la présente invention apparaîtront au cours de la description qui va suivre se rapportant à des modes de réalisation donnés à titre indicatif et non limitatifs.

La compréhension de cette description sera facilitée en se référant aux dessins ci-joints dans lesquels :
- la figure 1 est le synoptique d'un moteur asynchrone à deux enroulements identiques et alimenté au travers d'un dispositif de variation de vitesse selon un premier mode de réalisation ;
- la figure 2 illustrée, est une représentation similaire correspondant à un second mode de réalisation ;
- la figure 3 est une représentation similaire à la figure 2 illustrant un troisième mode de réalisation ;
- la figure 4 est une illustration aux figures 1 et 2 correspondant à un troisième mode de réalisation de l'invention ;
- la figure 5 représente de manière graphique la gestion de la variation de vitesse du moteur au travers d'un rapport tension efficace sur fréquence constant, sur au moins une plage de cette variation.

La présente invention concerne l'application d'un moteur asynchrone biphasé pour l'entraînement de dispositifs de fermeture de bâtiment, de type volet roulant. Elle concerne encore un tel dispositif de fermeture, notamment un volet roulant équipé du moteur asynchrone selon l'invention.

Tout particulièrement, selon l'invention, le moteur asynchrone 1, tel que représenté de manière schématisée dans les figures, et du type biphasé et comporte deux enroulements 2, 3, préférentiellement, mais non nécessairement, identiques. Ces enroulements 2, 3 sont raccordés, au travers d'un dispositif de variation de vitesse 5, au réseau 4 d'une alimentation en énergie électrique, par exemple d'une habitation, alimentation de type classique à courant alternatif, par exemple avec une tension nominative de 230 volts et une fréquence de 50 hertz.

Avantageusement, ce dispositif de variation de vitesse est à commande scalaire, c'est-à-dire conçus aptes à assurer un rapport tension sur fréquence V_{eff}/f constant sur au moins une plage déterminée de cette variation.

Selon un mode de réalisation, ce dispositif 5 se présente sous forme d'un convertisseur de puissance, constitué d'un redresseur 6 et d'un onduleur 7.

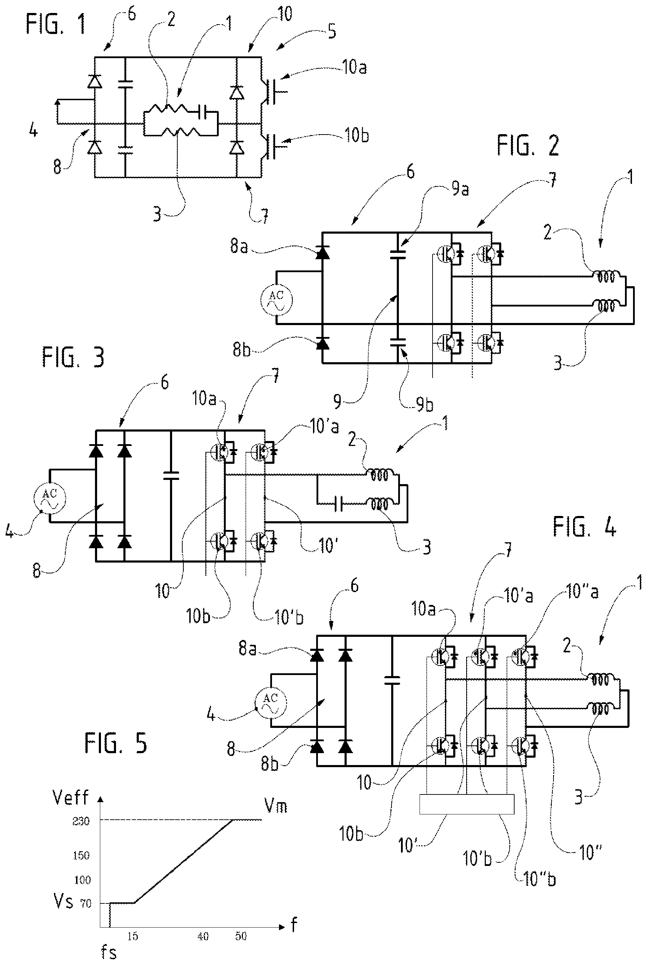

En ce qui concerne le redresseur 6, dans un premier mode d'exécution simplifié représenté dans la figure 1, il est défini par un pont 8 à deux diodes 8a, 8b, auquel est associé un diviseur capacitif 9, constitué d'un premier 9a et second condensateur 9b raccordés en série aux bornes du pont 8. Tandis que l'onduleur 7 est constitué par une cellule de commutation 10, là encore raccordée aux bornes du pont à diodes 8 et comportant deux interrupteurs de puissance en série, de type IGBT ou MOS 10a, 10b venant assurer le découpage, à la fréquence souhaitée, du courant redressé en sortie de redresseur 6 pour assurer l'alimentation du moteur 1. Au point milieu de cette cellule, entre les deux interrupteurs, sont reliés les deux enroulements 2 et 3, ceci au travers d'un condensateur de déphasage 11.

Pour permettre de s'affranchir de ce condensateur de déphasage 11, la commande de l'onduleur 7 impose la quadrature des courants d'alimentation du moteur 1. Cette conception conduit à l'usage de deux cellules de commutation 10, 10' raccordées aux bornes du pont à diodes 8 et composées, chacune, de 2 interrupteurs de puissance 10a, 10b, 10'a, 10'b, comme cela est visible dans la figure 2. Chacun des enroulements 2 et 3 est raccordé au point milieu d'une cellule de commutation, respectivement 10, 10'.

De manière avantageuse, l'onduleur 7, donc les interrupteurs sont commandés en modulation des largeurs d'impulsion, dite commande MLI, ce qui, sous l'effet inductif du moteur 1, a pour conséquence de lisser les courants statoriques et de rendre sinusoïdaux les courants circulant dans les deux enroulements 2, 3 du moteur 1. On notera que c'est au niveau de la commande qu'il est assuré le déphasage de 90° de l'alimentation de ces enroulements 2, 3. En somme, on est bien ici en présence d'un moteur diphasé.

L'emploi d'un redresseur 6 défini par un simple pont 8 à deux diodes 8a, 8b auquel est associé un diviseur capacitif 9 conduit à alimenter les bornes des interrupteurs de puissance sous une tension continue Ve = 2x230x√2, soit de 650 volts, partant d'une alimentation secteur alternative de 230 volts.

Pour remédier à ce problème et comme représenté dans la figure 3, le redresseur 6 doit faire appel à un pont 8 classique à quatre diodes 8a, 8b, 8c, 8d et un seul condensateur de filtrage associé 12. La tension d'alimentation est alors diminuée de moitié, Ve = 230√2 = 325V. Aussi, la contrainte en tension sur chaque transistor est diminuée de moitié.

Dans un tel montage, les commutations du transistor des interrupteurs de puissance IGBT 10a, 10b ; 10'a, 10'b peuvent créer des variations de tension importantes susceptibles de perturber l'environnement électromagnétique, dans la mesure où les enroulements 2, 3 sont reliés directement au réseau 4 et donnent la possibilité aux perturbations de remonter directement au niveau de ce dernier.

De manière à remédier à cet inconvénient et comme représenté dans la figure 4, il peut être fait appel à un onduleur 7 triphasé qui se distingue du mode de réalisation de la figure 3 au travers du branchement des enroulements 2 et 3 du moteur 1 qui, au lieu d'être relié directement à la source redressée 4, sont reliés à une troisième cellule de commutation 10" de l'onduleur 7. Cette troisième cellule 10" en parallèle aux deux autres comporte, comme pour celles-ci, deux interrupteurs de puissance IGBT ou MOS 10"a, 10"b, entre lesquels viennent se raccorder les enroulements 2, 3.

Selon une caractéristique particulière de l'invention, le dispositif de variation de vitesse 5, s'il est à commande scalaire en vue de conserver, lors de cette variation, un rapport tension efficace sur fréquence sensiblement constant, ceci n'est le cas que dans une plage située au-delà d'une tension seuil Vs et, préférentiellement, jusqu'à une tension maximale V_{M} prédéfinie, comme cela souhaite l'illustrer, de manière schématisée, le graphique de la figure 5.

Cette caractéristique présente un intérêt tout particulier lorsque le moteur est équipé d'un frein électromagnétique intégré, fonctionnant par manque de courant et dont il convient d'assurer le décollage en phase initiale de démarrage. Tout particulièrement, durant cette phase initiale de démarrage, il est appliqué au moteur une tension seuil Vs pour une fréquence d'alimentation fs déterminée pour assurer, dès la phase initiale d'alimentation du moteur 1, le décollage du frein électromagnétique. On fait ensuite évoluer la fréquence (selon le cas la tension) jusqu'à ce que le rapport V/f atteigne la valeur de la constante que l'on souhaite respecter en cours de variation de vitesse. Au-delà, la tension et la fréquence évoluent simultanément. Cette première étape de démarrage a été illustrée au travers du palier 13 sur la courbe du graphique de la figure 5.

Avantageusement, cette constante du rapport V_{eff}/f est égale à la valeur de la tension efficace sur le réseau 4 sur la fréquence nominale de ce réseau, soit par exemple 230 volts/50 hertz.

Comme l'illustre encore ce graphique, des essais ont pu démontrer qu'une tension d'alimentation d'au moins 10 volts, préférentiellement de l'ordre de 50 à 70 volts permettait d'obtenir le décollage du frein électromagnétique.

Précisément, un des avantages découlant de la présente invention consiste en ce que cette force d'appel du frein est bien plus importante en raison d'une fréquence plus basse au démarrage en comparaison à un moteur alimenté directement au travers du réseau.

En conséquence, ce frein électromagnétique, qui est une pièce d'usure sensible dans les moteurs actuels, peut être très facilement optimisé dans ce cas.

En particulier, il peut être renforcé dans sa conception pour, non seulement, un gain de longévité, mais, principalement, en vue de réagir avec une moindre inertie et obtenir un meilleur blocage du mécanisme d'entraînement d'un volet roulant pour, naturellement, un gain de sécurité.

De manière avantageuse, la tension maximale V_{M} d'alimentation du moteur 1 au-delà de laquelle le rapport V_{eff}/f n'est plus conservé constant correspond à la valeur efficace de la tension du réseau d'alimentation 4, par exemple 230 volts. On notera, toutefois, que l'on peut retenir une valeur quelconque pour cette tension V_{M}, la présente invention n'y étant nullement limitée.

Comparativement, en ce qui concerne la variation de la fréquence, celle-ci dépendant de la commande de commutation des interrupteurs de puissance, elle peut largement dépasser la fréquence du réseau.

A ce propos, il convient d'observer que dans la mesure où, sous une alimentation réseau de type 230 volts 50 hertz, les moteurs asynchrone à enroulement principal et secondaire, équipés d'une seule paire de pôles, étaient nécessairement soumis à une vitesse de rotation de 3.000 tours/mn, le dispositif de variation de vitesse 5, selon l'invention, conduisant à un couple plus important moyennant une vitesse de rotation moindre, permet d'envisager de soumettre ces moteurs à une vitesse de rotation maximale inférieure, par exemple de l'ordre de 1.500 tours/mm.

Ceci a pour conséquence une réduction sensible des vibrations magnétiques et mécaniques avec, là encore, un gain en inertie au niveau de la réactivité du frein électromagnétique et moins de patinage. A cela, il faut ajouter que les avantages de la présente invention autorisent un rapport de réduction moindre donc un rendement mécanique plus élevé.

Finalement, l'on observera encore que le dispositif de variation de vitesse selon l'invention permet, au cours des différentes phases de commande d'ouverture et de fermeture d'un système de fermeture de type volet roulant, d'effectuer des ralentissements et accélérations, évitant les bruits d'à coup, en particulier, d'arrivée en butée brutale.

Cet avantage a, évidemment, pour conséquence, de conduire à une moindre sollicitation des organes mécaniques dont on améliore, de fait, la longévité.

Bien que répondant aux contraintes propres à l'entrainement notamment de volets roulants, ce moteur asynchrone biphasé peut adopter une forme tubulaire de manière propre à être logé dans un tube d'enroulement du tablier d'un tel volet roulant. En effet ce moteur, aux performances comparables à celles d'un moteur triphasé, ne reprend pas l'encombrement de ce dernier pour garder des dimensions correspondant à un moteur asynchrone monophasé à condensateur de déphasage.

Comme il ressort de la description qui précède, la présente invention apporte des progrès sensibles dans ce domaine de la motorisation des systèmes de fermeture de bâtiment de type volet roulant.

## Revendications

1. Système motorisé de fermeture de bâtiment, de type volet roulant comportant un moteur asynchrone biphasé comprenant deux enroulements (2 ; 3) auquel est associé un frein électromagnétique et un dispositif de variation de vitesse (5) sous forme d'un convertisseur de puissance à commande scalaire, conçu apte à assurer un rapport tension efficace sur fréquence V_{eff}/f constant sur au moins une plage déterminée de la variation, **caractérisé par le fait que** :
▪ le dispositif de variation de vitesse (5) est conçu apte à soumettre ledit moteur (1), au moins en phase initiale de démarrage, à une tension seuil Vs et à une fréquence d'alimentation fs déterminée apte à assurer le décollage du frein électromagnétique ;
▪ et qu'au-delà de cette phase initiale ledit dispositif de variation de vitesse est défini apte à faire varier, selon le cas, la tension ou la fréquence jusqu'à atteindre la valeur de la constante à respecter du rapport tension efficace sur fréquence.

2. Système motorisé de fermeture de bâtiment, de type volet roulant, selon la revendication précédente, **caractérisé par le fait que** le dispositif de variation de vitesse (5) est conçu apte à respecter un rapport tension efficace sur fréquence constant jusqu'à atteindre une tension maximale V_{M} prédéfinie.

3. Système motorisé de fermeture de bâtiment, de type volet roulant, selon l'une quelconque des revendications précédentes, **caractérisé par le fait que** la constante du rapport tension efficace sur fréquence est égale à la tension efficace sur fréquence du réseau d'alimentation (4) auquel est raccordé le moteur.

4. Système motorisé de fermeture de bâtiment, de type volet roulant, selon la revendication 3, **caractérisé par le fait que** la tension maximale V_{M} prédéfinie est égale à la tension efficace du réseau d'alimentation du moteur.

5. Système motorisé de fermeture de bâtiment, de type volet roulant, selon l'une quelconque des revendications précédentes, **caractérisé par le fait que** le dispositif de variation de vitesse est défini par un convertisseur de puissance constitué d'un redresseur (6) à diodes et d'un onduleur (7) à interrupteurs de puissance de type IGBT ou MOS.

6. Système motorisé de fermeture de bâtiment, de type volet roulant, selon la revendication 5, **caractérisé par le fait que** le redresseur (6) est constitué d'un pont (8) à quatre diodes, tandis que l'onduleur (7) est constitué par deux cellules de commutation (10, 10') raccordées aux bornes du pont à diode (8) et comportant deux interrupteurs de puissance en série, de type IGBT ou MOS (10a, 10b ; 10'a, 10'b) chacun des enroulements primaire (2) et secondaire (3) étant raccordés au point milieu d'une cellule de commutation, respectivement (10, 10').

7. Système motorisé de fermeture de bâtiment, de type volet roulant, selon la revendication 6, **caractérisé par le fait qu'**il comporte une troisième cellule de commutation (10") constitué de deux interrupteurs de puissance en série (10"a, 10"b) entre lesquels viennent se raccorder les enroulements primaire (2) et secondaire (3).

8. Système motorisé de fermeture de bâtiment, de type volet roulant, selon l'une quelconque des revendications précédentes, **caractérisé par** le fait les enroulements (2 ; 3) sont identiques.

9. Système motorisé de fermeture de bâtiment, de type volet roulant, selon l'une quelconque des revendications précédentes, **caractérisé par** le fait les enroulements (2 ; 3) ne sont pas identiques.

10. Système motorisé de fermeture de bâtiment, de type volet roulant, selon l'une quelconque des revendications précédentes, **caractérisé par** le fait le moteur asynchrone biphasé est de type tubulaire de manière apte à être logé dans un tube d'enroulement de tablier de volet roulant.

## Patentansprüche

1. Motorisiertes System zum Verschließen eines Gebäudes vom Typ Rollladen, aufweisend einen Zweiphasen-Asynchronmotor, umfassend zwei Wicklungen (2; 3), dem eine elektromagnetische Bremse zugeordnet ist und eine Geschwindigkeitsänderungsvorrichtung (5) in Form eines Leistungskonverters mit skalarer Steuerung, die ausgebildet ist, um ein Verhältnis Effektivspannung zu Frequenz Veff/f zu sichern, das über mindestens einen bestimmten Bereich der Änderung konstant ist, **dadurch gekennzeichnet, dass**
- die Geschwindigkeitsänderungsvorrichtung (5) ausgebildet ist, um den Motor (1) mindestens in der Anfangsstartphase einer Grenzspannung Vs und einer bestimmten Versorgungsfrequenz fs auszusetzen, die imstande ist, das Lösen der elektromagnetischen Bremse zu sichern,
- und dass jenseits dieser Anfangsphase die Geschwindigkeitsänderungsvorrichtung als imstande definiert ist, je nach Fall die Spannung oder die Frequenz zu ändern, bis der Wert der des Verhältnisses Effektivspannung zu Frequenz einzuhaltenden Konstanten erreicht ist.

2. Motorisiertes System zum Verschließen eines Gebäudes vom Typ Rollladen nach vorangehendem Anspruch, **dadurch gekennzeichnet, dass** die Geschwindigkeitsänderungsvorrichtung (5) ausgebildet ist, dass sie imstande ist, ein konstantes Verhältnis Effektivspannung zu Frequenz einzuhalten, bis eine vorbestimmte maximale Spannung VM erreicht ist.

3. Motorisiertes System zum Verschließen eines Gebäudes vom Typ Rollladen nach einem der vorangehenden Ansprüche, **dadurch gekennzeichnet, dass** die Konstante des Verhältnisses Effektivspannung zu Frequenz gleich der Effektivspannung zu Frequenz des Versorgungsnetzes (4) ist, an das der Motor angeschlossen ist.

4. Motorisiertes System zum Verschließen eines Gebäudes vom Typ Rollladen nach Anspruch 3, **dadurch gekennzeichnet, dass** die vorbestimmte maximale Spannung VM gleich der Effektivspannung des Versorgungsnetzes des Motors ist.

5. Motorisiertes System zum Verschließen eines Gebäudes vom Typ Rollladen nach einem der vorangehenden Ansprüche, **dadurch gekennzeichnet, dass** die Geschwindigkeitsänderungsvorrichtung von einem Leistungskonverter definiert ist, der von einem Diodengleichrichter (6) und einem Wechselrichter (7) mit Leistungsschaltern vom Typ IGBT oder MOS gebildet ist.

6. Motorisiertes System zum Verschließen eines Gebäudes vom Typ Rollladen nach Anspruch 5, **dadurch gekennzeichnet, dass** der Gleichrichter (6) von einer Brücke (8) mit vier Dioden gebildet ist, wogegen der Wechselrichter (7) von zwei Umschaltzellen (10, 10') gebildet ist, die mit den Klemmen der Diodenbrücke (8) verbunden sind und zwei Leistungsschalter in Reihe vom Typ IGBT oder MOS (10a, 10b; 10'a, 10'b) umfasst, wobei jede der Primär- (2) und Sekundärwicklung (3) mit dem Mittelpunkt einer jeweiligen Umschaltzelle (10, 10') verbunden sind.

7. Motorisiertes System zum Verschließen eines Gebäudes vom Typ Rollladen nach Anspruch 6, **dadurch gekennzeichnet, dass** es eine dritte Umschaltzelle (10") aufweist, die von zwei Leistungsschaltern in Reihe (10"a, 10"b) gebildet ist, zwischen denen die Primär- (2) und Sekundärwicklung (3) angeschlossen sind.

8. Motorisiertes System zum Verschließen eines Gebäudes vom Typ Rollladen nach einem der vorangehenden Ansprüche, **dadurch gekennzeichnet, dass** die Wicklungen (2; 3) identisch sind.

9. Motorisiertes System zum Verschließen eines Gebäudes vom Typ Rollladen nach einem der vorangehenden Ansprüche, **dadurch gekennzeichnet, dass** die Wicklungen (2; 3) nicht identisch sind.

10. Motorisiertes System zum Verschließen eines Gebäudes vom Typ Rollladen nach einem der vorangehenden Ansprüche, **dadurch gekennzeichnet, dass** der Zweiphasen-Asynchronmotor vom rohrförmigen Typ ist, so dass er imstande ist, in einem Wicklungsrohr einer Rollladenschürze untergebracht zu sein.

## Claims

1. A motorized system for closing a building, of the rolling blind type, including a two-phase asynchronous motor comprising two windings (2; 3) with which an electromagnetic brake is associated and a speed varying device (5) in the form of a power converter with scaler control, designed to be able to provide a constant effective voltage to frequency ratio Veff/f over at least one determined range of the variation, **characterized in that**:
- the speed varying device (5) is designed to be able to subject said motor (1), at least in the initial startup phase, to a determined voltage threshold Vs and power supply frequency fs able to ensure the takeoff of the electromagnetic brake; and
- beyond this initial phase, said speed varying device is defined able to vary, depending on the case, the voltage or frequency until reaching the value of the constant to be respected for the effective voltage to frequency ratio.

2. The motorized system for closing a building, of the rolling blind type, according to the preceding claim, **characterized in that** the speed varying device (5) is designed to be able to respect a constant effective voltage to frequency ratio until reaching a defined maximum voltage VM.

3. The motorized system for closing a building, of the rolling blind type, according to any one of the preceding claims, **characterized in that** the constant of the effective voltage to frequency ratio is equal to the effective voltage to frequency of the power supply grid (4) to which the motor is connected.

4. The motorized system for closing a building, of the rolling blind type, according to claim 3, **characterized in that** the predefined maximum voltage VM is equal to the effective voltage of the power supply grid of the motor.

5. The motorized system for closing a building, of the rolling blind type, according to any one of the preceding claims, **characterized in that** the speed varying device is defined by a power converter made up of a diode rectifier (6) and a power switch inverter (7) of the IGBT or MOS type.

6. The motorized system for closing a building, of the rolling blind type, according to claim 5, **characterized in that** the rectifier (6) is made up of a bridge (8) with four diodes, while the inverter (7) is made up by two switching cells (10, 10') connected to the terminals of the diode bridge (8) and including two power switches in series, of the IGBT or MOS type (10a, 10b; 10'a, 10'b), each of the primary (2) and secondary (3) windings being connected to the midpoint of the switching cell (10, 10'), respectively.

7. The motorized system for closing a building, of the rolling blind type, according to claim 6, **characterized in that** it includes a third switching cell (10") made up of two power switches in series (10"a, 10"b) between which the primary (2) and secondary (3) windings connect.

8. The motorized system for closing a building, of the rolling blind type, according to any one of the preceding claims, **characterized in that** the windings (2; 3) are identical.

9. The motorized system for closing a building, of the rolling blind type, according to any one of the preceding claims, **characterized in that** the windings (2; 3) are not identical.

10. The motorized system for closing a building, of the rolling blind type, according to any one of the preceding claims, **characterized in that** the two-phase asynchronous motor is of the tubular type so as to be able to be housed in a rolling blind apron winding tube.
